# EUROPÄISCHE PATENTSCHRIFT

(11) **EP 1 447 830 B1**
(45) Veröffentlichungstag und Bekanntmachung des Hinweises auf die Patenterteilung: **19.12.2007**
(21) Anmeldenummer: 03100335.3
(22) Anmeldetag: 13.02.2003
(51) Int. Cl.: H01H 47/00, B60T 7/10

(54) **Schaltvorrichtung zur codierung unterschiedlicher Schaltzustände**
Switching device for coding of different states
Dispositif de commutation pour le codage de différents états

(43) Veröffentlichungstag der Anmeldung: 18.08.2004
(73) Patentinhaber: Ford Global Technologies, LLC, Dearborn, MI 48126 (US)
(72) Erfinder: Daniels, Rudolf, 42929, Wermelskirchen (DE); Frese, Thomas, 50737, Koeln (DE); Kaffanke, Thomas, 50259, Pulheim (DE)
(74) Vertreter: Drömer, Hans-Carsten

(56) Entgegenhaltungen:
- WO-A-00/29268
- DE-A- 19 962 556

## Beschreibung

Die Erfindung betrifft eine Schaltvorrichtung zur sicheren drahtgebundenen Codierung von drei unterschiedlichen Zuständen sowie eine zugehörige elektronische Steuereinheit für eine Kraftfahrzeugfunktion.

In Kraftfahrzeugen ist eine Vielzahl verschiedener Einrichtungen vorhanden, deren Funktion aus der Ferne von einer über Leitungen angeschlossenen Schaltvorrichtung gesteuert wird. Die Schaltvorrichtung enthält üblicherweise interne Schalter, um unterschiedliche Verbindungsmuster zwischen den Leitungen herzustellen und so verschiedene Steuereingaben zu codieren.

Sofern die von der gesteuerten Einrichtung ausgeführte Funktion sicherheitsrelevant für das Kraftfahrzeug ist, sollte die Wahrscheinlichkeit einer Fehlsteuerung etwa durch Leitungsunterbrechungen oder Kurzschlüsse in der Schaltvorrichtung oder in den Übertragungsleitungen möglichst gering sein. Diesbezüglich wird in der WO 99/39951 eine elektrische Feststellbremse beschrieben, welche mit einer Schaltvorrichtung verbunden ist, an der drei verschiedene Schalterzustände eingestellt werden können. Die Schalterzustände codieren jeweils das Halten des bisherigen Zustandes, das Lösen, und das Anlegen der Feststellbremse. Die Schaltvorrichtung soll aus Sicherheitsgründen redundant und fehlertolerant ausgelegt werden können, ohne daß jedoch eine derartige Auslegung im Einzelnen beschrieben wird.

Die DE 199 62 556 A1 offenbart eine Schaltvorrichtung gemäß Oberbegriff des Anspruchs 1, mit welcher redundant über sechs Anschlussleitungen das Lösen beziehungsweise Schließen einer Feststellbremse in einem Kraftfahrzeug codiert werden kann. Bei der Schaltvorrichtung sind in einem Ruhezustand die Anschlussleitungen in drei disjunkten Paaren miteinander über Dioden verknüpft. Durch Schließen der drei "lock" Schalter können von einem Fahrer zur Signalisierung eines gewünschten Anziehens der Feststellbremse zusätzlich drei Paare von verbundenen Anschlussleitungen erzeugt werden. In ähnlicher Weise können als Kommando für das Lösen der Feststellbremse "release" Schalter geschlossen werden, um drei andere zusätzliche Verbindungspaare herzustellen.

Vor diesem Hintergrund war es Aufgabe der vorliegenden Erfindung, Mittel zur sicheren drahtgebundenen Codierung von mindestens drei unterschiedlichen Zuständen bereitzustellen, welche bei möglichst geringem Aufwand eine große Funktionssicherheit gewährleisten.

Diese Aufgabe wird durch eine Schaltvorrichtung mit den Merkmalen des Anspruchs 1 sowie durch eine elektronische Steuereinheit mit den Merkmalen des Anspruchs 6 gelöst.

Vorteilhafte Ausgestaltungen sind in den Unteransprüchen enthalten.

Die erfindungsgemäße Schaltvorrichtung zur sicheren drahtgebundenen Codierung von (mindestens) drei unterschiedlichen Zuständen enthält sechs Anschlußleitungen, an welche die von einer zu steuernden Einrichtung eines Kraftfahrzeuges kommenden Leitungen angeschlossen werden können. Die sechs Anschlußleitungen sind durch in der Schaltvorrichtung vorhandene Schalter intern derart miteinander verknüpft, daß diese je nach Schalterstellung in (mindestens) drei verschiedenen Verbindungsmustern geschaltet werden können. Jedes der Verbindungsmuster wird dabei durch drei (Verbindungs-)Paare miteinander verbundener Anschlußleitungen beschrieben beziehungsweise definiert, wobei alle einen zulässigen Code darstellenden Verbindungsmuster aus verschiedenen derartigen Verbindungspaaren bestehen. Unter einem "Schalter" soll vorliegend in einem breiten Sinne jede Einrichtung verstanden werden, welche die kontrollierte, reversible Unterbrechung einer elektrischen Verbindung zwischen einem Eingang und einem Ausgang ermöglicht, unabhängig davon, ob dies durch elektromechanische oder elektronische Bauteile bewirkt wird oder ob der Schalter im Sinne eines "Tasters" ohne eine Betätigung einen definierten Ruhezustand annimmt.

Durch die Schaltvorrichtung können jeweils zwei der Anschlußleitungen miteinander verbunden werden, wodurch ein Verbindungsmuster aus drei Paaren von verbundenen Anschlußleitungen entsteht. Anhand dieses Verbindungsmusters, welches leicht über eine Überprüfung der miteinander verbundenen Anschlußleitungen detektiert werden kann, lassen sich verschiedene Zustände an der Schaltvorrichtung einstellen und aus der Ferne abfragen. Wichtig ist dabei, daß die einen zulässigen Code darstellenden Verbindungsmuster sich jeweils in allen ihren Verbindungspaaren voneinander unterscheiden. Auf diese Weise wird eine hohe Redundanz der Codierung erreicht. Wenn zum Beispiel Leitungen in der oder zu der Schaltvorrichtung unterbrochen sind oder einzelne Schalter der Schaltvorrichtung gestört sind, wird dies in der Regel nur einen Teil der Verbindungspaare verändem. Das eingestellte Verbindungsmuster kann daher weiterhin sicher erkannt werden, solange mindestens eines der konstituierenden Verbindungspaare unverändert bleibt.

Vorzugsweise enthält die Schaltvorrichtung sechs interne Umschalter, wobei ein Umschalter definitionsgemäß eine eingehende Leitung wahlweise mit einer von mindestens zwei ausgehenden Leitungen verbinden kann.

Gemäß einer bevorzugten Weiterbildung der Schaltvorrichtung sind die sechs i n-ternen Umschalter dabei in zwei Stufen mit je drei Umschaltern angeordnet, wobei alle zu einer Stufe gehörenden Schalter gekoppelt sind. Das heißt, daß der Nutzer durch eine einzige Betätigungsmaßnahme jeweils alle Umschalter einer Stufe in ihrer Schaltstellung verändert. Die Bedienung von sechs internen Umschaltern reduziert sich daher für den Nutzer auf die Betätigung von zwei Umschalter-Stufen.

Vorstehende Schaltvorrichtung wird vorteilhafterweise so weitergebildet, daß die drei Umschalter der ersten Stufe jeweils
- eingangsseitig mit genau einer Anschlußleitung verbunden sind (wobei jeder der drei Umschalter diesbezüglich mit einer anderen Anschlußleitung verbunden ist);
- ausgangsseitig in einer ersten Schalterstellung mit genau einer Internleitung aus einem ersten Satz von drei Internleitungen verbunden sind (wobei jeder der drei Umschalter diesbezüglich mit einer anderen Internleitung verbunden ist), und
- ausgangsseitig in einer zweiten Schalterstellung zum einen mit genau einer Internleitung aus einem zweiten Satz von drei Internleitungen sowie zum anderen mit genau einer der drei Anschlußleitungen, die nicht auf dem Eingang eines Umschalters liegen, verbunden sind (wobei jeder der drei Umschalter diesbezüglich mit einer anderen Internleitung und einer anderen Anschlußleitung verbunden ist).

Durch eine derartige erste Stufe von Umschaltern wird funktional eine Baueinheit der Schaltvorrichtung verwirklicht, bei welcher
- in der ersten Schalterstellung der zugehörigen Umschalter eine erste Hälfte der Anschlußleitungen an einen ersten Satz von Internleitungen zur weiteren Verknüpfung durchgeschaltet wird, wobei der zweite Satz von Internleitungen zur Rückführung der hergestellten Verknüpfungen an die zweite Hälfte der Anschlußleitungen zur Verfügung steht, und
- in der zweiten Schalterstellung der zugehörigen Umschalter die erste Hälfte der Anschlußleitungen jeweils mit einer Anschlußleitung aus der zweiten Hälfte der Anschlußleitungen verbunden wird.

In der zweiten Schalterstellung erzeugt die Baueinheit unmittelbar ein Verbi n-dungsmuster aus paarweise miteinander verbundenen Anschlußleitungen, während die Baueinheit in der ersten Schalterstellung die Anschlußleitungen an eine zweite Baueinheit zur Herstellung eines anderen Verbindungsmusters weiterleitet.

Eine mögliche Realisierung einer solchen zweiten Baueinheit wird durch eine zweite Stufe erreicht, bei der die drei zugehörigen Umschalter
- eingangsseitig mit genau einer Internleitung aus dem ersten Satz von drei Internleitungen verbunden sind (wobei jeder der drei Umschalter diesbezüglich mit einer anderen Internleitung verbunden ist);
- ausgangsseitig je nach Schalterstellung mit einer von zwei Internleitungen des zweiten Satzes von Internleitungen verbunden sind (wobei in den zwei möglichen Schalterstellungen jeder der drei Umschalter diesbezüglich mit einer anderen Internleitung verbunden ist).

Die Erfindung betrifft ferner eine elektronische Steuereinheit wie zum Beispiel eine elektrische Feststellbremse für Kraftfahrzeuge. Die Steuereinheit ist dadurch gekennzeichnet, daß diese sechs Zugriffsleitungen zum Abfragen des Zustandes einer Schaltvorrichtung aufweist und dazu eingerichtet ist, verschiedene Verbindungsmuster, die durch Verbindungen der Zugriffsleitungen untereinander beschrieben werden, zu erkennen und bestimmten Aktionen zuzuordnen. Eine derartige Steuereinheit läßt sich insbesondere in Verbindung mit einer Schaltvorrichtung der oben beschriebenen Art verwenden, so daß diese eine sichere, redundante Steuerung der zugehörigen Funktion ermöglicht.

Gemäß einer bevorzugten Ausgestaltung ist die Steuereinheit dahingehend ausgebildet, jeweils alle Verbindungsmuster, bei welchen dieselben zwei Zugriffsleitungen miteinander (und sonst mit keinen weiteren Zugriffsleitungen) verbunden sind, demselben Code bzw. derselben Aktion zuzuordnen. Da ein Verbindungsmuster aus drei Paaren von verbundenen Zugriffsleitungen besteht, kann mit einer solchen gleichartigen Klassifizierung aller Verbindungsmuster, die jeweils in mindestens einem Paar übereinstimmen, eine hohe Redundanz der Steuerfunktion erreicht werden. Dabei kann insbesondere ein bestimmter Code auch dann noch sicher erkannt werden, wenn alle bis auf eines der Paare eines Verbindungsmusters gestört sind. Dies ermöglicht insbesondere die Weiterführung des vorgesehenen Betriebes im Falle eines Fehlers.

Zu den Aktionen, die die Steuereinheit einem durch ein Verbindungsmuster ausgedrückten Code zugeordnet, gehört vorzugsweise die Detektion beziehungsweise Meldung eines Fehlerzustandes. Ein Fehlerzustand kann dabei insbesondere dann angenommen werden, wenn das auf den Zugriffsleitungen bestehende Verbindungsmuster nicht einem vorgegebenen Satz von zulässigen Verbindungsmustern entspricht.

Diesbezüglich kann die Steuereinrichtung optional dazu eingerichtet sein, einen Fehlerzustand dann zu detektieren, wenn nicht alle Zugriffsleitungen paarweise miteinander verknüpft sind. Eine derartige Abweichung von einer paarweisen Verknüpfung der Zugriffsleitungen kann zum Beispiel in Verbindung mit einer Schaltvorrichtung der erläuterten Art durch Kurzschlüsse oder Leitungsunterbrechungen entstehen.

Im Folgenden wird die Erfindung mit Hilfe der Figuren beispielhaft erläutert. Es zeigen:
- Fig. 1: den Schaltplan einer speziellen Ausführungsform einer erfindungsgemäßen Schaltvorrichtung, und
- Fig. 2: drei mögliche und zulässige Verbindungsmuster zwischen den Anschlußleitungen, die sich mit der Schaltvorrichtung von Figur 1 herstellen lassen.

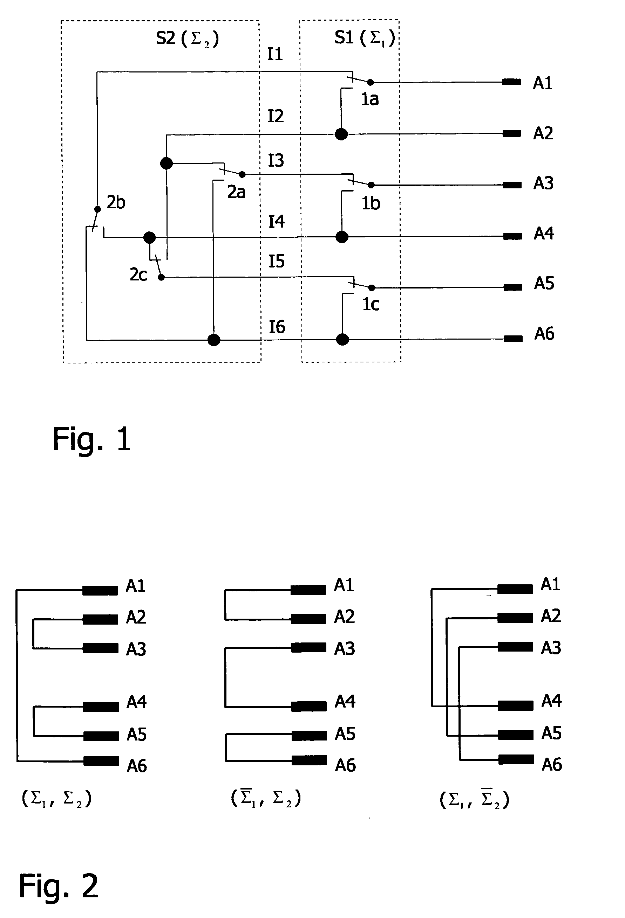

Die erfindungsgemäße Schaltvorrichtung weist gemäß dem Schaltplan von Figur 1 sechs Anschlußleitungen A1 - A6 auf. Diese werden vorteilhafterweise in einem Stecker zusammengefaßt, um den einfachen Anschluß eines (sechsadrigen) Verbindungskabels zu ermöglichen. Das Verbindungskabel kann dabei z.B. zu einer elektronischen Steuereinheit (nicht dargestellt) für eine zu kontrollierende Kraftfahrzeugfunktion (elektrische Feststellbremse, Beifahrerairbag etc.) führen.

Die sechs Anschlußleitungen A1 - A6 führen in eine erste, durch gestrichelte Linien abgegrenzte Baueinheit bzw. erste Stufe S1, deren Ausgangsseite durch sechs Internleitungen I1 - I6 gebildet wird. Die erste Stufe S1 enthält drei Umschalter 1a, 1b und 1c, wobei diese konstruktiv derart miteinander gekoppelt sein sollen, daß diese alle gleichzeitig betätigt, also zum Beispiel von der dargestellten oberen Stellung (Σ₁) in die untere Stellung (Σ̅₁) überführt werden.

Der erste Umschalter 1a der ersten Stufe S1 ist eingangsseitig mit der ersten Anschlußleitung A1 verbunden, welche dieser in der dargestellten Schalterstellung mit der ersten Internleitung I1 verbindet. Alternativ kann der erste Umschalter sie in der anderen (zweiten) Schalterstellung (nicht dargestellt) mit der zweiten Anschlußleitung A2 verbinden. Die zweite Anschlußleitung A2 ist darüber hinaus mit der zweiten Intemleitung I2 verbunden.

Die anderen beiden Umschalter 1b und 1c der ersten Stufe S1 können in analoger Weise die Anschlußleitung A3 bzw. A5 entweder mit der Internleitung I3 bzw. I5 oder mit der Anschlußleitung A4 bzw. A6 verbinden, wobei die letztgenannten Anschlußleitungen A4 und A6 ferner mit den Internleitungen I4 bzw. I6 verbunden sind.

Die sechs Internleitungen I1 - I6 führen weiterhin in eine zweite, durch gestrichelte Linien abgegrenzte Stufe S2, in welcher diese in der dargestellten Weise durch einen zweiten Satz von miteinander gekoppelten Umschaltern 2a, 2b und 2c verknüpft werden. Dabei wird speziell
- die Internleitung I3 über den Umschalter 2a wahlweise mit der Internleitung I2 oder der Internleitung I6 verbunden;
- die Internleitung I1 über den Umschalter 2b wahlweise mit der Internleitung I6 oder der Intemleitung I4 verbunden;
- die Internleitung I5 über den Umschalter 2c wahlweise mit der Internleitung I4 oder der Internleitung I2 verbunden.

Figur 2 zeigt die mit der Schaltvorrichtung von Figur 1 einstellbaren Verbindungsmuster zwischen den Anschlußleitungen A1 - A6, denen im vorliegenden Anwendungsfall ein zulässiger Zustand bzw. Code für eine zugehörige Steueraktion zugeordnet ist.

Im linken Teil von Figur 2 ist das Verbindungsmuster dargestellt, das den in Figur 1 dargestellten Schalterstellungen (nachfolgend symbolisch als "Σ₁," und "Σ₂" bezeichnet) für die Stufen S1 und S2 entspricht. Dieses Verbindungsmuster läßt sich durch die drei Paare der kurzgeschlossenen Anschlußleitungen wie folgt beschreiben: {(A1; A6) (A2; A3) (A4; A5)}. Bei Anwendung der Schaltvorrichtung für die Steuerung einer elektrischen Feststellbremse könnte dieses Verbindungsmuster zum Beispiel dem Zustand "Neutral" entsprechen.

Der mittlere Teil von Figur 2 zeigt das Verbindungsmuster {(A1; A2) (A3; A4) (A5; A6)}, das sich bei der zur Darstellung von Figur 1 gegensätzlichen Schalterstellung Σ̅₁ der Umschalter 1a, 1b, 1c der ersten Stufe S1 und einer unveränderten Schalterstellung Σ₂ der Umschalter der zweiten Stufe S2 ergibt. Dieses Muster könnte zum Beispiel dem Kommando zum Anziehen einer Feststellbremse entsprechen.

Schließlich ist im rechten Teil von Figur 2 das Verbindungsmuster {(A1; A4) (A2; A5) (A3; A6)} dargestellt, welches sich bei der gegenüber Figur 1 unveränderten Schalterstellung Σ₁ der Umschalter der ersten Stufe S1 und der gegenteiligen Schalterstellung Σ̅₂ der Umschalter 2a, 2b, 2c der zweiten Stufe S2 ergibt. Dieses Verbindungsmuster könnte dem Kommando zum Lösen der Feststellbremse entsprechen.

Durch die beschriebene Schaltung werden somit drei verschiedene Zustände der Schaltvorrichtung über die Anschlußleitungen A1 - A6 unterscheidbar, wobei jeder Zustand durch ein spezifisches Verbindungsmuster bestehend aus drei Verbindungspaaren von Anschlußleitungen definiert wird. Darüber hinaus ist wichtig, daß keine zwei Verbindungsmuster ein gleiches Verbindungspaar von Anschlußleitu n-gen aufweisen. Eine Betätigung der Umschalter der ersten Stufe S1 beziehungsweise der zweiten Stufe S2 ändert somit komplett den Schaltzustand der Schaltvorrichtung. Dies führt dazu, daß jedes Verbindungsmuster im Prinzip bereits an einem der es konstituierenden Verbindungspaare eindeutig erkannt werden kann (z.B. weist eine Verbindung der Leitungen A5 und A6 auf das mittlere Verbi n-dungsmuster von Figur 2 hin). Sollten daher z. B. aufgrund von Leitungsunterbrechungen oder Kurzschlüssen Störungen in der Schaltvorrichtung auftreten oder im Verbindungskabel zu der nicht dargestellten elektronischen Steuereinheit, so können die gewünschten Steuerfunktionen dennoch sicher erkannt und ausgeführt werden, solange nur eines der Verbindungspaare in einem unveränderten, korrekten Zustand verbleibt. Gleichzeitig kann an den gestörten Verbindungspaaren das Vorliegen des Fehlers erkannt werden. Sofern keines der Verbindungspaare mehr in seinem vorgesehenen Zustand ist, kann auch dies erkannt werden und das angesteuerte System daraufhin in einen definierten Sicherheitszustand (z. B. ausgeschaltet) überführt werden.

## Patentansprüche

1. Schaltvorrichtung zur sicheren drahtgebundenen Codierung von drei unterschiedlichen Zuständen, enthaltend
sechs Anschlußleitungen (A1, ..., A6), welche durch interne Schalter (1a, 1b, 1c, 2a, 2b, 2c) der Schaltvorrichtung in drei verschiedenen Verbindungsmustern geschaltet werden können,
**dadurch gekennzeichnet,dass**
jedes Verbindungsmuster **durch** drei Paare miteinander verbundener Anschlußleitungen beschrieben wird, wobei für jedes Verbindungsmuster jede Anschlußleitung zu genau einem Paar gehört und wobei alle Verbindungsmuster aus unterschiedlichen Paaren bestehen.

2. Schaltvorrichtung nach Anspruch 1,
**dadurch gekennzeichnet, daß**
diese sechs interne Umschalter (1a, 1b, 1c, 2a, 2b, 2c) enthält.

3. Schaltvorrichtung nach Anspruch 2,
**dadurch gekennzeichnet, daß**
die sechs internen Umschalter in zwei Stufen (S1, S2) mit je drei Umschaltern (1a, 1b,1c; 2a, 2b, 2c) angeordnet sind, wobei die Umschalter einer Stufe jeweils gekoppelt sind.

4. Schaltvorrichtung nach Anspruch 3,
**dadurch gekennzeichnet, daß**
die drei Umschalter (1a, 1b, 1c) der ersten Stufe (S1) jeweils
a) eingangsseitig mit einer der Anschlußleitungen (A1, A3, A5) verbunden sind;
b) ausgangsseitig in einer ersten Schalterstellung mit einer Internleitung aus einem ersten Satz (I1, I3, I5) von drei Internleitungen verbunden sind, und
c) weiterhin ausgangsseitig in einer zweiten Schalterstellung zum einen mit einer Intemleitung aus einem zweiten Satz (I2, I4, I6) von drei Intemleitungen sowie zum anderen mit einer der drei Anschlußleitungen (A2, A4, A6), die nicht am Eingang eines Umschalters der ersten Stufe (S1) liegen, verbunden sind.

5. Schaltvorrichtung nach Anspruch 4,
**dadurch gekennzeichnet, daß**
die drei Umschalter (2a, 2b, 2c) der zweiten Stufe (S2) jeweils
a) eingangsseitig mit einer Internleitung aus dem ersten Satz (I1, I3, I5) von Internleitungen verbunden sind;
b) ausgangsseitig je nach Schalterstellung mit einer von zwei Intemleitungen des zweiten Satzes (I2, I4, I6) von Intemleitungen verbunden sind.

6. Elektronische Steuereinheit für eine Kraftfahrzeugfunktion,
**dadurch gekennzeichnet, daß**
diese sechs Zugriffsleitungen zum Abfragen des Zustandes einer Schaltvorrichtung nach einem der Ansprüche 1 bis 5 aufweist und dazu eingerichtet ist, die von dieser Schaltvorrichtung erzeugten verschiedene Verbindungsmuster, die durch Verbindungen der Zugriffsleitungen untereinander beschrieben werden, zu erkennen und bestimmten Aktionen zuzuordnen.

7. Steuereinheit nach Anspruch 6,
**dadurch gekennzeichnet, daß**
diese dahingehend ausgebildet ist, jeweils alle Verbindungsmuster, bei welchen dieselben zwei Zugriffsleitungen nur miteinander verbunden sind, derselben Aktion zuzuordnen.

8. Steuereinheit nach Anspruch 6 oder 7,
**dadurch gekennzeichnet, daß**
eine der Aktionen die Detektion eines Fehlerzustandes ist.

9. Steuereinheit nach mindestens einem der Ansprüche 6 bis 8,
**dadurch gekennzeichnet, daß**
diese dahingehend ausgebildet ist, einen Fehlerzustand dann zu detektieren, wenn nicht alle Zugriffsleitungen paarweise miteinander verknüpft sind.

10. Steuereinheit nach mindestens einem der Ansprüche 6 bis 9,
**dadurch gekennzeichnet, daß**
diese mit einer Schaltvorrichtung nach mindestens einem der Ansprüche 1 bis 5 gekoppelt ist.

## Claims

1. Switching device for the reliable wire-bound coding of three different states, comprising six connection lines (A1, ..., A6), which can be switched by internal switches (1a, 1b, 1c, 2a, 2b, 2c) of the switching device into three different connecting patterns, **characterized in that** each connecting pattern is described by three pairs of connection lines connected to one another, for each connecting pattern each connection line belonging to precisely one pair and all the connecting patterns comprising different pairs.

2. Switching device according to Claim 1, **characterized in that** it comprises six internal change-over switches (1a, 1b, 1c, 2a, 2b, 2c).

3. Switching device according to Claim 2, **characterized in that** the six internal change-over switches are arranged in two stages (S1, S2) with three change-over switches (1a, 1b, 1c; 2a, 2b, 2c) each, the change-over switches of one stage respectively being coupled.

4. Switching device according to Claim 3, **characterized in that** the three change-over switches (1a, 1b, 1c) of the first stage (S1) are respectively
a) connected on the input side to one of the connection lines (A1, A3, A5);
b) connected on the output side in a first switch position to an internal line from a first set (I1, I3, I5) of three internal lines, and
c) further connected on the output side in a second switch position on the one hand to an internal line from a second set (I2, I4, I6) of three internal lines and on the other hand to one of the three connection lines (A2, A4, A6) which do not lie at the input of a change-over switch of the first stage (S1).

5. Switching device according to Claim 4, **characterized in that** the three change-over switches (2a, 2b, 2c) of the second stage (S2) are respectively
a) connected on the input side to an internal line from the first set (I1, I3, I5) of internal lines;
b) connected on the output side, depending on the switch position, to one of two internal lines of the second set (I2, I4, I6) of internal lines.

6. Electronic control unit for a motor vehicle function, **characterized in that** it has six access lines for inquiring the state of a switching device according to one of Claims 1 to 5 and is set up for detecting the various connecting patterns, which are generated by this switching device and described by connections of the access lines to one another, and assigning specific actions.

7. Control unit according to Claim 6, **characterized in that** it is designed to assign all the connecting patterns in which the same two access lines are connected only to each other in each case to the same action.

8. Control unit according to Claim 6 or 7, **characterized in that** one of the actions is the detection of a fault state.

9. Control unit according to at least one of Claims 6 to 8, **characterized in that** it is designed to detect a fault state whenever not all the access lines are interconnected in pairs.

10. Control unit according to at least one of Claims 6 to 9, **characterized in that** it is coupled to a switching device according to at least one of Claims 1 to 5.

## Revendications

1. Dispositif de commutation pour le codage fiable par câblage de trois états différents, comportant six lignes de raccordement (A1, ..., A6) qui peuvent être commutées par les commutateurs internes (1a, 1b, 1c, 2a, 2b, 2c) du dispositif de commutation selon trois configurations de liaisons, **caractérisé en ce que** chaque configuration de liaison est décrite par trois paires de lignes de raccordement reliées les unes aux autres, chaque ligne de raccordement appartenant exactement à une paire pour chaque configuration de liaison et toutes les configurations de liaisons étant constituées de paires différentes.

2. Dispositif de commutation selon la revendication 1, **caractérisé en ce que** celui-ci comporte six commutateurs internes (1a, 1b, 1c, 2a, 2b, 2c).

3. Dispositif de commutation selon la revendication 2, **caractérisé en ce que** les six commutateurs internes sont disposés en deux étages (S1, S2) avec chacun trois commutateurs (1a, 1b, 1c ; 2a, 2b, 2c), les commutateurs étant respectivement couplés à un étage.

4. Dispositif de commutation selon la revendication 3, **caractérisé en ce que** les trois commutateurs (1a, 1b, 1c) du premier étage (S1) sont respectivement
a. reliés du côté des entrées à une des lignes de raccordement (A1, A3, A5) ;
b. reliés du côté des sorties, dans une première position des commutateurs, à une ligne interne appartenant à une première série (I1, I3, I5) de trois lignes internes, et
c. reliés de plus du côté des sorties, dans une deuxième position des commutateurs, d'une part à une ligne interne appartenant à une deuxième série (I2, I4, I6) de trois lignes internes ainsi que d'autre part à une des trois lignes de raccordement (A2, A4, A6) qui ne se trouvent pas à l'entrée d'un commutateur du premier étage (S1).

5. Dispositif de commutation selon la revendication 4, **caractérisé en ce que** les trois commutateurs (2a, 2b, 2c) du deuxième étage (S2) sont respectivement
a. reliés du côté des entrées à une ligne interne appartenant à la première série (I1, I3, I5) de lignes internes ;
b. reliés du côté des sorties, selon la position des commutateurs, à une parmi deux lignes internes appartenant à la deuxième série (I2, I4, I6) de lignes internes.

6. Unité électronique de commande pour une fonction d'un véhicule automobile, **caractérisée en ce que** celle-ci présente six lignes d'accès pour interroger l'état d'un dispositif de commutation selon une des revendications 1 à 5 et qu'elle est arrangée pour reconnaître les différentes configurations de liaisons engendrées par ce dispositif de commutation, qui sont décrites par des liaisons des lignes d'accès entre elles, et pour assigner des actions définies.

7. Unité de commande selon la revendication 6, **caractérisée en ce que** celle-ci est développée pour assigner la même action respectivement à toutes les configurations de liaisons pour lesquelles seules les deux mêmes lignes d'accès sont reliées entres elles.

8. Unité de commande selon la revendication 6 ou 7, **caractérisée en ce qu'**une des actions est la détection d'un état de défaut.

9. Unité de commande selon une au moins des revendications 6 à 8, **caractérisée en ce que** celle-ci est développée pour détecter un état de défaut lorsque toutes les lignes d'accès ne sont pas reliées entre elles par paires.

10. Unité de commande selon une au moins des revendications 6 à 9, **caractérisée en ce que** celle-ci est accouplée à un dispositif de commutation selon une au moins des revendications 1 à 5.
